# FASCICULE DE BREVET EUROPEEN

(11) **EP 4 347 362 B1**
(45) Date de publication et mention de la délivrance du brevet: **03.09.2025**
(21) Numéro de dépôt: 22727963.5
(22) Date de dépôt: 03.05.2022
(51) Int. Cl.: B62D 27/06, B62D 35/02

(54) **ÉCRAN AÉRAULIQUE MUNI D'UN DISPOSITIF DE LIBÉRATION D'ÉCROU PRÉSENT DANS UNE CAVITÉ**
LUFTDEFLEKTOR, DER MIT EINER AUSLÖSEVORRICHTUNG EINER MUTTER IN EINEM HOHLRAUM AUSGESTATTET IST
AIR DEFLECTOR EQUIPPED WITH A DEVICE FOR RELEASING A NUT PRESENT IN A CAVITY

(30) Priorité: 04.06.2021 FR 2105889
(43) Date de publication de la demande: 10.04.2024
(73) Titulaire: Stellantis Auto SAS, 78300 Poissy (FR)
(72) Inventeur: BERTH, Stephane, 92320 CHATILLON (FR)
(74) Mandataire: BCIP
(86) Numéro de dépôt international: PCT/FR2022/050848
(87) Numéro de publication internationale: WO 2022/254115

(56) Documents cités:
- DE-A1- 102005 044 308
- DE-A1- 102013 000 630
- FR-A1- 3 071 218

## Description

La présente invention revendique la priorité de la demande française 2105889 déposée le 4 juin 2021.

La présente invention concerne le domaine technique de l'automobile et plus particulièrement un moyen de fixation d'un écran aéraulique, sous le plancher d'un véhicule automobile.

### Arrière-plan technologique

Afin d'accroître l'aérodynamisme d'un véhicule automobile, il est connu de l'état de la technique le positionnement d'écrans aérauliques sous son châssis. Le ou les écrans aérauliques sont maintenus par l'intermédiaire d'écrous, vissés à des goujons solidaires du châssis du véhicule automobile. Pour préserver l'aérodynamisme de l'écran aéraulique, les écrous sont en retrait d'une face avant de l'écran aéraulique, destinée à faire à la chaussée. Plus précisément, chaque écrou est placé dans le fond d'un logement en forme de fût, dont le fond est percé de manière à permettre le passage de l'extrémité d'un goujon.

Le document DE102005044308 décrit un écran aéraulique disposé sous un châssis de véhicule, l'écran comportant une cavité au fond de laquelle est placé un écrou de fixation permettant de fixer l'écran à la caisse. Des moyens de pré-maintien de l'écrou, sous forme de languette rigides, sont disposés au fond de la cavité.

Afin de faciliter la mise en place des écrous dans le fond des fûts, ceux-ci comportent deux languettes faisant saillie, à l'intérieur du fût. Les languettes sont présentes au niveau du fond du fût et s'étendent en direction de son fond. Les extrémités des languettes sont aptes à s'écarter légèrement de la paroi du fût, de manière à permettre l'insertion d'un écrou dans le fond du fût, puis reprendre leur position originale de sorte à maintenir l'écrou au niveau du fond du fût. Par la suite, l'écran aéraulique est positionné sous le plancher d'un véhicule automobile, de sorte que soit présente dans chaque fût l'extrémité d'un goujon soudé au plancher du véhicule. Les écrous sont alors vissés aux goujons pour assurer le maintien de l'écran aéraulique au véhicule automobile.

Il peut s'avérer nécessaire de retirer l'écran aéraulique pour permettre des opérations de maintenance du véhicule automobile ou bien la fixation d'accessoires comme un attelage remorque. Il est alors nécessaire de dévisser chaque écrou présent dans les fûts.

Pour des raisons de coûts économiques et de poids, les écrous sont réalisés en matière plastique. Un écrou en matière plastique est également plus aisé à viser sur un goujon, car son taraudage s'adapte plus aisément au filetage du goujon, lors de son vissage.

Néanmoins, lors de leur dévissage, le taraudage des écrous en plastique peut être endommagé de façon irréversible. C'est pourquoi il est exigé le remplacement de chaque écrou après son dévissage, afin de garantir le maintien de l'écran aéraulique au véhicule automobile.

Le retrait des écrous, présents dans le fond des fûts de l'écran aéraulique, s'avère être une étape délicate et fastidieuse, du fait de la présence des languettes empêchant la chute naturelle des écrous. Les languettes doivent donc être déplacées à l'aide d'un outil dédié, inséré à l'intérieur des fûts. Pour cela, un opérateur doit se positionner sous le véhicule automobile, en vis-à-vis de chaque fût, afin de guider l'outil jusqu'aux languettes. En déplaçant les languettes à l'aide de l'outil, l'opérateur s'expose alors à un risque de chute de l'écrou sur son visage et donc à un risque de blessure.

L'invention vise à proposer un dispositif facilitant le retrait des écrous présents dans le fond des fûts d'un écran aéraulique, sans l'aide d'outil spécifique et plus aisé à mettre en œuvre pour un opérateur.

### Objet de l'invention

À cet effet, l'invention propose un écran aéraulique pour véhicule automobile comprenant au moins une cavité s'étendant selon une direction normale ou sensiblement normale à une face avant de l'écran aéraulique, la cavité étant délimitée par une protubérance au niveau d'une face arrière de l'écran aéraulique, le fond de la cavité comportant une ouverture principale destinée à permettre, depuis la face arrière, l'insertion d'une extrémité d'une tige filetée dans la cavité, la cavité comprenant deux languettes souples s'étendant en direction du fond de la cavité, entre une extrémité proximale liée à une face interne de la cavité et une extrémité distale faisant saillie dans la cavité.

L'invention est remarquable en ce que chaque languette comprend, entre son extrémité proximale et son extrémité distale, un appendice s'étendant à travers une ouverture secondaire de la cavité, de manière à permettre à un opérateur de déplacer l'extrémité distale de la languette, depuis l'extérieur de la cavité.

De façon avantageuse, les appendices sont accessibles par un opérateur, depuis la face arrière de l'écran aéraulique. Ainsi, un opérateur peut aisément et facilement déplacer les extrémités distales des languettes présentes dans la cavité, par l'intermédiaire des appendices, sans qu'il ne soit pour cela nécessaire d'utiliser un outil spécifique, ni à se positionner devant l'ouverture de la cavité. De ce fait, l'opérateur ne s'expose plus à un risque de chute d'un écrou sur son vissage, lorsque les languettes sont écartées afin de libérer un écrou retenu dans le fond de la cavité par lesdites languettes.

Selon une autre caractéristique de l'invention, au moins un appendice forme un épaulement ou bien une contremarche, au niveau de l'extrémité distale d'au moins une languette. La largeur de l'épaulement est configurée pour servir d'appui à un écrou de sorte à entraver ou empêcher sa chute lorsqu'il est présent dans le fond de la cavité.

Selon une autre caractéristique de l'invention, l'ouverture principale et au moins une ouverture secondaire débouchent sur une même face de la protubérance. En d'autres termes, les ouvertures sont comprises ou sensiblement comprises dans un même plan.

Selon une autre caractéristique de l'invention, un appendice d'au moins une languette s'étend selon une direction normale ou sensiblement normale à la face avant de l'écran aéraulique.

Selon une autre caractéristique de l'invention, au moins une cavité comprend deux languettes en vis-à-vis.

Selon une autre caractéristique de l'invention, l'extrémité distale d'au moins une languette est apte à s'écarter de sa position initiale, sur une distance comprise entre 0,5 cm et 5 cm, de préférence entre 1 cm et 2 cm.

Selon une autre caractéristique de l'invention, l'extrémité distale d'au moins une languette est apte à se déplacer de façon réversible.

L'invention concerne également un véhicule automobile comprenant un écran aéraulique tel que décrit ci-dessus.

D'autres avantages et caractéristiques pourront ressortir plus clairement de la description qui va suivre.

### Description des figures

L'invention sera mieux comprise à la lecture de la description qui va suivre, donnée uniquement à titre d'exemple non limitatif et faite en se référant aux dessins dans lesquels :
[Fig. 1] représente une vue en perspective d'un écran aéraulique selon l'invention, positionné en vis-à-vis du châssis d'un véhicule automobile ;
[Fig. 2] représente une vue en perspective et partielle d'un écran aéraulique selon la figure 2, fixé au châssis d'un véhicule automobile ;
[Fig. 3] représente une vue en perspective et partielle d'un écran aéraulique comportant un écrou maintenu dans le fond d'une cavité.

Dans ces figures, les mêmes références sont utilisées pour désigner les mêmes éléments.

### Description détaillée de l'invention

Pour rappel, l'invention propose un dispositif facilitant le retrait des écrous présents dans le fond des fûts d'un écran aéraulique, sans l'aide d'outil spécifique et plus aisé à mettre en œuvre pour un opérateur.

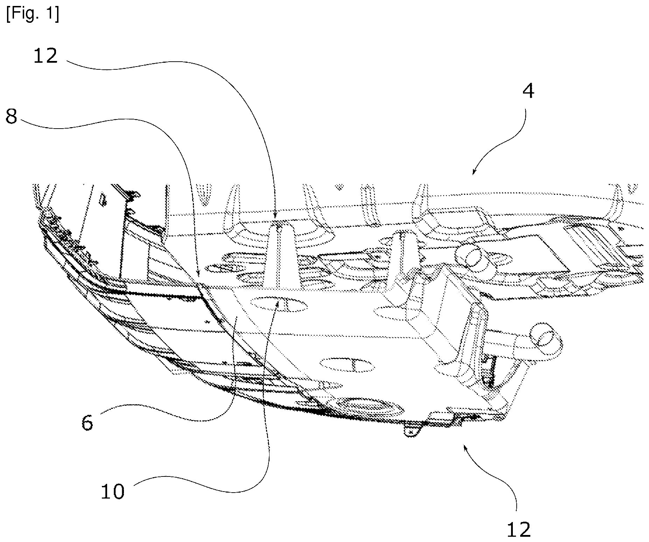

La figure 1 représente un mode de réalisation non limitatif d'un écran aéraulique 2 selon l'invention, en position de montage sur le châssis 4 d'un véhicule automobile.

L'écran aéraulique est délimité par une face avant 6, destinée à être en vis-à-vis de la chaussée, et une face arrière 8, destinée à être en vis-à-vis du dessous du châssis 4 d'un véhicule automobile.

De façon connue, l'écran aéraulique comprend plusieurs cavités 10 s'étendant selon une direction normale ou sensiblement normale à sa face avant 6. Au niveau de la face arrière 8 de l'écran aéraulique, la cavité est délimitée par une protubérance 12 faisant saillie.

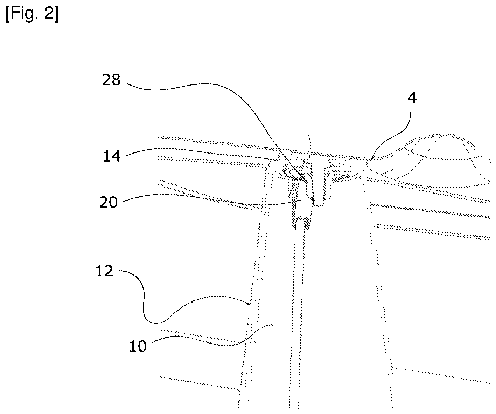

Comme illustré par la figure 2, le fond 14 de la cavité 10 comporte une ouverture principale 16, destinée à permettre depuis la face arrière de l'écran aéraulique, l'insertion d'une extrémité d'une tige filetée solidaire du châssis 4.

La cavité 10 comporte deux languettes 20 souples en vis-à-vis, s'étendant en direction du fond 14 de la cavité, entre une extrémité proximale 22 liée à une face interne 24 de la cavité et une extrémité distale 26 faisant saillie dans la cavité. Les extrémités distales 26 font saillie de manière à entraver la chute d'un écrou 28 présent dans le fond de la cavité.

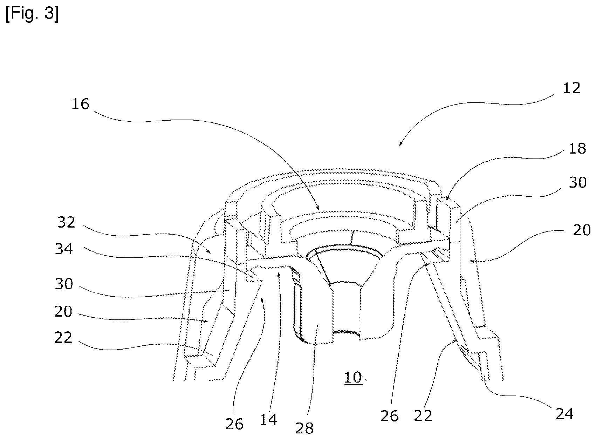

Comme illustré par la figure 3, afin de permettre un remplacement aisé et moins risqué de l'écrou 28 par un opérateur, l'invention propose la présence, entre l'extrémité proximale 22 et l'extrémité distale 26 d'une languette, un appendice 30 s'étendant à travers une ouverture secondaire 32 de la cavité, de manière à ce qu'un opérateur puisse déplacer l'extrémité distale de la languette depuis l'extérieur de la cavité. De préférence, l'extrémité 18 de l'appendice fait saillie à la surface de la protubérance 12. L'extrémité 18 de l'appendice peut dépasser de la protubérance, dans une plage de valeurs comprise entre 0,5 cm et 5 cm, de préférence entre 1 cm et 3 cm.

Selon le présent exemple, l'ouverture secondaire 32 est comprise dans le même plan que l'ouverture principale 16 et s'étend également le long de la protubérance 12.

De préférence, l'appendice 30 s'étend selon une direction normale ou sensiblement normale à la face avant 6 de l'écran aéraulique 2. L'appendice 30 est positionné sur la languette de manière à former un épaulement 34 ou contre marche, au niveau de l'extrémité distale 26 de la languette 20. La largeur de l'épaulement 34, définie selon une direction radiale à l'axe longitudinal de la cavité 10, est de dimension suffisante pour entraver la chute d'un écrou placé dans le fond de la cavité.

La languette se caractérise par une souplesse suffisante, au niveau de son extrémité proximale 22, de manière à permettre à un opérateur positionné en vis-à-vis de la face arrière 8 de l'écran aéraulique de déplacer aisément l'extrémité distale 26 de la languette, par l'intermédiaire de l'appendice 30, afin de libérer l'écrou 28 et provoquer sa chute dans la cavité 10.

L'invention propose ainsi écran aéraulique 2 muni d'un dispositif de libération d'écrou, présent dans une cavité 10, sans l'aide d'outil spécifique et plus aisé à mettre en œuvre pour un opérateur, sans risque de blessure.

## Revendications

1. Écran aéraulique (2) pour véhicule automobile, comprenant au moins une cavité (10) s'étendant selon une direction normale ou sensiblement normale à une face avant (6) de l'écran aéraulique, la cavité (10) étant délimitée par une protubérance (12) au niveau d'une face arrière (8) de l'écran aéraulique (2), le fond de la cavité (10) comportant une ouverture principale (16) destinée à permettre, depuis la face arrière (8), l'insertion d'une extrémité d'une tige filetée dans la cavité (10), la cavité comprenant deux languettes (20) souples s'étendant en direction du fond de la cavité (10), entre une extrémité proximale (22) liée à une face interne (24) de la cavité et une extrémité distale (26) faisant saillie dans la cavité, **caractérisé en ce que** chaque languette (20) comprend, entre son extrémité proximale (22) et son extrémité distale (26), un appendice (30) s'étendant à travers une ouverture secondaire (32) de la cavité (10), de manière à ce qu'un opérateur puisse déplacer l'extrémité distale (26) de la languette (20) depuis l'extérieur de la cavité (10).

2. Écran aéraulique (2) selon la revendication 1, **caractérisé en ce qu'**un appendice (30) forme un épaulement (34) au niveau de l'extrémité distale (26) d'au moins une languette (20).

3. Écran aéraulique (2) selon la revendication 1 ou 2, **caractérisé en ce que** l'ouverture principale (16) et au moins une ouverture secondaire (32) débouchent sur une même face de la protubérance (12).

4. Écran aéraulique (2) selon l'une des revendications 1 à 3, **caractérisé en ce qu'**un appendice (30) d'au moins une languette (20) s'étend selon une direction normale ou sensiblement normale à la face avant (6) de l'écran aéraulique (2).

5. Écran aéraulique (2) selon l'une des revendications 1 à 4, **caractérisé en ce qu'**au moins une cavité (10) comprend deux languettes en vis-à-vis.

6. Écran aéraulique (2) selon l'une des revendications 1 à 5, **caractérisé en ce que** l'extrémité distale (26) d'au moins une languette (20) est apte à s'écarter de sa position initiale, sur une distance comprise entre 1 cm et 5 cm.

7. Écran aéraulique (2) selon la revendication 6, **caractérisé en ce que** l'extrémité distale (26) d'au moins une languette (20) est apte à se déplacer de façon réversible.

8. Véhicule automobile comprenant un écran aéraulique (2) selon l'une des revendications 1 à 7.

## Patentansprüche

1. 1]Kraftfahrzeug-Luftblende (2), die mindestens eine Ausnehmung (10) umfasst, die sich in einer Richtung senkrecht oder im Wesentlichen senkrecht zu einer Vorderseite (6) der Luftblende erstreckt, wobei die Ausnehmung (10) durch einen Vorsprung (12) an einer Rückseite (8) der Luftblende (2) begrenzt ist, und wobei der Boden der Ausnehmung (10) eine Hauptöffnung (16) aufweist, um von der Rückseite (8) aus das Einführen eines Endes einer Gewindestange in die Ausnehmung zu ermöglichen (10), wobei der Hohlraum zwei flexible Zungen (20) umfasst, die sich in Richtung des Bodens des Hohlraums (10) zwischen einem proximalen Ende (22), das mit einer Innenfläche (24) des Hohlraums verbunden ist, und einem distalen Ende (26), das in den Hohlraum hineinragt, erstrecken, **dadurch gekennzeichnet, dass** jede Zunge (20) zwischen ihrem proximalen Ende (22) und ihrem distalen Ende (26) einen Fortsatz (30) umfasst, der sich durch eine sekundäre Öffnung (32) des Hohlraums (10) erstreckt, sodass ein Bediener bewegt werden kann das distale Ende (26) der Lasche (20) von der Außenseite des Hohlraums (10).

2. Luftblende (2) nach Anspruch 1, **dadurch gekennzeichnet, dass** ein Fortsatz (30) eine Schulter (34) am distalen Ende (26) mindestens einer Zunge (20) bildet.

3. Luftblende (2) nach Anspruch 1 oder 2, **dadurch gekennzeichnet, dass** die Hauptöffnung (16) und mindestens eine Nebenöffnung (32) auf derselben Seite des Vorsprungs (12) münden.

4. Luftblende (2) nach einem der Ansprüche 1 bis 3, **dadurch gekennzeichnet, dass** sich ein Ansatz (30) mindestens einer Zunge (20) in einer Richtung senkrecht oder im Wesentlichen senkrecht zur Vorderseite (6) der Luftblende (2) erstreckt.

5. Luftblende (2) nach einem der Ansprüche 1 bis 4, **dadurch gekennzeichnet, dass** mindestens ein Hohlraum (10) zwei einander gegenüberliegende Zungen umfasst.

6. Luftblende (2) nach einem der Ansprüche 1 bis 5, **dadurch gekennzeichnet, dass** das distale Ende (26) mindestens einer Zunge (20) geeignet ist, sich von seiner Ausgangsposition über einen Abstand zwischen 1 cm und 5 cm zu entfernen.

7. Luftblende (2) nach Anspruch 6, **dadurch gekennzeichnet, dass** das distale Ende (26) mindestens einer Zunge (20) reversibel bewegbar ist.

8. Kraftfahrzeug mit einer Luftblende (2) nach einem der Ansprüche 1 bis 7.

## Claims

1. Aeraulic screen (2) for a motor vehicle, comprising at least one cavity (10) extending along a management that is normal or substantially normal to a front face (6) of the aeraulic screen, the cavity (10) being delimited by a protuberance (12) on the level of a rear face (8) of the aeraulic screen (2), the bottom of the cavity (10) comprising a main opening (16) intended to allow, from the rear face (8), the insertion of one end of a threaded rod into the cavity (10), the cavity comprising two flexible tongues (20) extending in management with the bottom of the cavity (10), between a proximal end (22) connected to an internal face (24) of the cavity and a distal end (26) projecting into the cavity, **characterised in that** each tongue (20) comprises, between its proximal end (22) and its distal end (26), an appendix (30) extending through a secondary opening (32) of the cavity (10), so that an operator can move the distal end (26) of the tab (20) from outside the cavity (10).

2. Aeraulic shield (2) according to claim 1, wherein an appendix (30) forms a shoulder (34) on the level of the distal end (26) of at least one tongue (20).

3. Aeraulic screen (2) according to Claim 1 or 2, **characterised in that** the main opening (16) and at least one secondary opening (32) open onto the same face of the protuberance (12).

4. Aeraulic screen (2) according to one of Claims 1 to 3, **characterised in that** an appendix (30) of at least one tongue (20) extends in a management which is normal or substantially normal to the front face (6) of the aeraulic screen (2).

5. Aeraulic screen (2) according to one of Claims 1 to 4, **characterised in that** at least one cavity (10) comprises two facing tongues.

6. Aeraulic screen (2) according to one of Claims 1 to 5, **characterised in that** the distal end (26) of at least one tongue (20) is capable of moving away from its initial position over a distance of between 1 cm and 5 cm.

7. Aeraulic screen (2) according to claim 6, **characterised in that** the distal end (26) of at least one tongue (20) is capable of moving reversibly.

8. Motor vehicle comprising an air screen (2) according to one of Claims 1 to 7.
